(19) Europäisches Patentamt
European Patent Office
Office européen des brevets

(11) **EP 4 446 772 A1**

(12) **EUROPÄISCHE PATENTANMELDUNG**

(43) Veröffentlichungstag:
**16.10.2024   Patentblatt 2024/42**

(21) Anmeldenummer: **23167653.7**

(22) Anmeldetag: **13.04.2023**

(51) Internationale Patentklassifikation (IPC):
**G01S 7/481** (2006.01)    **G01S 7/497** (2006.01)
**G01S 17/931** (2020.01)   **G02B 26/12** (2006.01)
**G06K 7/10** (2006.01)

(52) Gemeinsame Patentklassifikation (CPC):
**G01S 7/4972; G01S 7/4817; G01S 17/931;
G02B 26/12; G02B 26/122; G02B 26/127;
G06K 7/10613; G06K 7/10623; G06K 7/10821**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Leuze electronic GmbH + Co. KG
73277 Owen/Teck (DE)**

(72) Erfinder:
• **Kirchner, Markus
72636 Frickenhausen (DE)**

• **Heckmayr, Alexander
86807 Buchloe (DE)**
• **Feller, Bernhard
86316 Friedberg (DE)**
• **Sanzi, Dr., Friedrich
73230 Kirchheim/Teck (DE)**

(74) Vertreter: **Ruckh, Rainer Gerhard
Patentanwaltskanzlei Ruckh
Jurastraße 1
73087 Bad Boll (DE)**

(54) **OPTISCHER SENSOR UND VERFAHREN ZUR ERFASSUNG VON MARKEN MITTELS EINES OPTISCHEN SENSORS**

(57)     Die Erfindung betrifft einen optischen Sensor (1) zur Erfassung von Marken, mit einem Sendelichtstrahlen (4) emittierenden Sender (5), einem Empfangslichtstrahlen (6) empfangenden Empfänger (7), einer Auswerteeinheit (8), in welcher Empfangssignale des Empfängers (7) zur Detektion von Marken ausgewertet werden, und mit einer Ablenkeinheit in Form eines Facetten (10) aufweisenden Polygonspiegelrads (9), wobei durch eine Drehbewegung des Polygonspiegelrads (9) um eine Drehachse die Sendelichtstrahlen (4) nacheinander an den Facetten (10) abgelenkt und dadurch periodisch innerhalb eines Erfassungsbereichs geführt werden. Zwei stationär angeordnete Kontrollsensoren (14, 15) sind vorhanden, mittels derer mindestens eine Facettenstruktur erfasst wird. In der Auswerteeinheit (8) wird eine Funktionskontrolle dadurch durchgeführt, dass Kontrollsignale der Kontrollsensoren (14, 15) miteinander in Beziehung gesetzt werden.

**Fig. 2**

**Beschreibung**

Die Erfindung betrifft einen optischen Sensor und ein Verfahren zur Erfassung von Marken mittels eines optischen Sensors.

Derartige optische Sensoren bilden scannende Sensoren. Ein derartiger optischer Sensor umfasst generell einen Sendelichtstrahlen emittierenden Sender, einen Empfangslichtstrahlen empfangenden Empfänger und eine Ablenkeinheit, mittels derer die Sendelichtstrahlen periodisch innerhalb eines Erfassungsbereichs geführt sind.

Die Ablenkeinheit besteht aus einem motorisch getriebenen Polygonspiegelrad, das eine Anzahl von Facetten aufweist. Das Polygonspiegelrad dreht sich um eine Drehachse, wodurch die Sendelichtstrahlen nacheinander an den Facetten abgelenkt und so im Erfassungsbereich geführt werden. Die Größe des flächigen Erfassungsbereichs ist durch die Anzahl und Dimensionen der Facetten bestimmt. Diese Facetten können auch geformt oder gegeneinander verkippt sein um damit einen räumlichen Erfassungsbereich festzulegen.

Die so abgelenkten Sendelichtstrahlen werden von Marken im Erfassungsbereich als Empfangslichtstrahlen zurück zum Empfänger geführt. Die dabei generierten Empfangssignale werden in einer Auswerteeinheit ausgewertet. Dabei erfolgt in der Auswerteeinheit anhand der Empfangssignale eine Dekodierung der Marken.

Insbesondere für den Einsatz in sicherheitsrelevanten Applikationen muss der optische Sensor einem vorgegebenen Sicherheitslevel genügen. Hierzu ist es erforderlich, Fehler des optischen Sensors zu erkennen.

Der Erfindung liegt die Aufgabe zugrunde einen optischen Sensor bereitzustellen, der den für einen Einsatz in sicherheitsrelevanten Applikationen geforderten Sicherheitsanforderungen genügt.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Marken, mit einem Sendelichtstrahlen emittierenden Sender, einem Empfangslichtstrahlen empfangenden Empfänger, und einer Auswerteeinheit, in welcher Empfangssignale des Empfängers zur Detektion von Marken ausgewertet werden. Der optische Sensor weist weiter eine Ablenkeinheit in Form eines Facetten aufweisenden Polygonspiegelrads auf, wobei durch eine Drehbewegung des Polygonspiegelrads um eine Drehachse die Sendelichtstrahlen nacheinander an den Facetten abgelenkt und dadurch periodisch innerhalb eines Erfassungsbereichs geführt werden. Zwei stationär angeordnete Kontrollsensoren sind vorhanden, mittels derer mindestens eine Facettenstruktur erfasst wird. In der Auswerteeinheit wird eine Funktionskontrolle dadurch durchgeführt, dass Kontrollsignale der Kontrollsensoren miteinander in Beziehung gesetzt werden.

Die Erfindung betrifft weiterhin ein entsprechendes Verfahren.

Besonders vorteilhaft erfassen die Kontrollsensoren unterschiedliche Facettenstrukturen.

Der erfindungsgemäße optische Sensor bildet einen scannenden Sensor und weist einen Sendelichtstrahlen emittierenden Sender, einen Empfangslichtstrahlen empfangenden Empfänger und eine Ablenkeinheit auf, mit der die Sendelichtstrahlen wiederholt, insbesondere periodisch innerhalb eines flächigen Erfassungsbereichs geführt werden.

Die Ablenkeinheit besteht aus einem Polygonspiegelrad, das mit einem Antrieb angetrieben wird und dadurch um eine Drehachse Drehbewegungen ausführt.

Das Polygonspiegelrad weist eine Anzahl von Facetten auf, die vorzugsweise identisch ausgebildet sind. Die Facetten bilden Spiegelflächen, an denen die Sendelichtstrahlen reflektiert werden.

Durch die Drehbewegung des Polygonspiegelrads werden die Sendelichtstrahlen nacheinander an den Facetten abgelenkt und so periodisch in einem flächigen Erfassungsbereich geführt, dessen Größe durch die Anzahl und Größen der Facetten bestimmt ist. Bei Ablenkung der Sendelichtstrahlen an einer Facette wird somit ein Scan durchgeführt, bei dem die Sendelichtstrahlen einmal den Erfassungsbereich überstreichen.

Insbesondere um einen Einsatz des optischen Sensors in sicherheitstechnischen Applikationen zu ermöglichen, weist dieser zwei Kontrollsensoren auf, mittels derer Funktionen des optischen Sensors kontrolliert und überwacht werden. Dadurch können Fehlfunktionen des optischen Sensors aufgedeckt und geeignete Gegenmaßnahmen getroffen werden, so dass ein fehlersicherer Betrieb des optischen Sensors gewährleistet ist.

Die Kontrollsensoren detektieren eine Facettenstruktur oder unterschiedliche Facettenstrukturen des Polygonspiegelrads und generieren dabei Kontrollsignale. Anhand der Kontrollsignale der einzelnen Kontrollsensoren können bereits Funktionen des optischen Sensors kontrolliert werden. Die Kontrollsensoren können gleichartig oder verschieden, d.h. diversitär sein. Beispiele für Kontrollsensoren sind optische oder magnetische Inkrementalgeber oder Lichtschranken.

Der Begriff Facettenstrukturen, die mit Kontrollsensoren erfasst werden, umfasst generell auch den Facetten räumlich zugeordnete Strukturen.

Erfindungsgemäß werden die Kontrollsignale miteinander in Beziehung gesetzt, wodurch noch umfangreichere Funktionskontrollen durchgeführt werden können. Da die stationär an verschiedenen Orten im optischen Sensor angeordneten Kontrollsensoren unterschiedliche Facettenstrukturen detektieren, bilden die Kontrollsensoren ein diversitäres Kontrollsensorsystem.

Dadurch, dass die Kontrollsignale der beiden Kontrollsensoren miteinander in Beziehung gesetzt werden, werden die Kontrollsignale beider Kontrollsensoren plausibilisiert, wodurch eine gegenseitige Kontrolle der Kontrollsensoren möglich ist.

Gemäß einer vorteilhaften Ausführungsform der Erfindung wird mit einem ersten Kontrollsensor der Übergangsbereich zwischen zwei Facetten erfasst.

Dabei bildet das von ersten Kontrollsensoren generierte Signal bei Detektion eines Übergangsbereichs zwischen zwei Facetten ein Startsignal für einen Scan und ein Kontrollsignal.

Das mit dem ersten Kontrollsensor generierte Starsignal wird in der Auswerteeinheit dazu verwendet, die Empfangssignale der Empfänger den einzelnen Scans zuzuordnen.

Gemäß einer konstruktiv vorteilhaften Ausgestaltung weist der erste Kontrollsensor ein Lichtstrahlen emittierendes Sendeelement und ein Empfangselement auf. Diese sind relativ zueinander so positioniert sind, dass die Lichtstrahlen des Sendeelements nur dann zum Empfangselement geführt sind, wenn diese am Übergangsbereich zwischen zwei Facetten reflektiert werden.

Vorteilhaft ist im Bereich einer Facette des Polygonspiegelrads ein Referenzelement vorhanden, welches mit einem zweiten Kontrollsensor erfassbar ist.

Beispielsweise ist das Referenzelement am Rand der Facette von dieser abstehend befestigt, wobei insbesondere das Referenzelement ein Blechteil ist.

Dabei generiert der zweite Kontrollsensor ein Kontrollsignal, wenn sich das Referenzelement in dessen Detektionsbereich bewegt.

Insbesondere ist der zweite Kontrollsensor eine Lichtschranke.

Da der erste Kontrollsensor jeden Übergang zwischen zwei Facetten detektiert, generiert dieser pro Umdrehung des Polygonspiegelrads N Kontrollsignale, wobei N die Anzahl der Facetten des Polygonspiegelrads ist.

Da der zweite Kontrollsensor das Referenzelement detektiert, das nur an einer der Facetten des Polygonspiegelrads angeordnet ist, generiert der zweite Kontrollsensor pro Umdrehung des Polygonspiegelrad nur ein Kontrollsignal.

Der erste Kontrollsensor generiert somit Kontrollsignale mit einer N-fach höheren Frequenz als die Kontrollsignale des zweiten Kontrollsensors.

Da die beiden Kontrollsensoren generell stationär im optischen Sensor, insbesondere in dessen Gehäuse angeordnet sind, besteht eine feste, vorgegebene räumliche Beziehung zwischen den Kontrollsensoren.

Aufgrund dessen besteht im fehlerfreien Fall auch ein definierter zeitlicher Bezug der Kontrollsignale der beiden Kontrollsensoren, was erfindungsgemäß dadurch geprüft wird, dass die Kontrollsignale der Kontrollsensoren zeitlich miteinander in Beziehung gesetzt werden. Generell wird dabei der zeitliche Bezug der Kontrollsignale der Kontrollsensoren in der Auswerteeinheit mit einer Erwartungshaltung verglichen, um festzustellen, ob eine fehlerfreie Funktion gegeben ist oder nicht.

Besonders vorteilhaft werden Zeitdifferenzen von Kontrollsignalen des ersten und zweiten Kontrollsensors gebildet, und die Zeitdifferenzen werden mit Sollwerten verglichen.

Die Zeitdifferenzen der Kontrollsensoren sind generell abhängig von der Drehzahl des Polygonspiegelrads. Dabei wird bei Start des Betriebs des optischen Sensors das Polygonspiegelrad hochgefahren, bis eine vorgegebene Nenndrehzahl erreicht ist, d.h. im eingefahrenen Arbeitsbetrieb wird das Polygonspiegelrad mit konstanter Drehzahl betrieben um damit die Sendelichtstrahlen periodisch im Erfassungsbereich zu führen und die Marken zu detektieren. Die Fehlerprüfung erfolgt dann, wenn sich die Drehzahl des Polygonspiegelrads nicht mehr ändert, so dass immer gleichbleibende Ist-Differenzen registriert werden, was durch einen Vergleich mit konstanten Sollwerten überprüft werden kann.

Mit dieser Fehlerprüfung können Fehler durch den ersten und zweiten Kontrollsensor aufgedeckt werden.

Bei den genannten Ausführungsformen kann insbesondere festgestellt werden, ob das Referenzelement, das mit dem zweiten Kontrollsensor erfasst wird, mechanisch verbogen oder verschoben ist. Weiterhin kann festgestellt werden, ob das Empfangselement des ersten Kontrollsensors relativ zur Sendereinheit verschoben oder verdreht ist. Neben diesen mechanischen Veränderungen der Kontrollsensoren können auch Fehler in der Hardware oder Software, insbesondere im Programmablauf zur Steuerung von Sensorkomponenten aufgedeckt werden.

Die Fehlersicherheit des optischen Sensors kann weiterhin dadurch erhöht werden, dass die Auswerteeinheit einen mehrkanaligen, fehlersicheren Aufbau aufweist.

Insbesondere kann die Auswerteeinheit aus zwei sich zyklisch gegenseitig überwachenden Rechnereinheiten bestehen. Insbesondere tauschen die Rechnereinheiten auch die mit den Kontrollsensoren ermittelten Zeitdifferenzen aus, die in jeder Rechnereinheit zudem auf Plausibilität geprüft werden, indem diese mit den Sollwerten verglichen werden, wodurch die Fehlersicherheit des optischen Sensors weiter erhöht wird.

Weiterhin kann die Fehlersicherheit des optischen Sensors dadurch erhöht werden, dass Zeitdifferenzen von Kontrollsignalen des ersten Kontrollsensors gebildet werden und mit Sollwerten verglichen werden.

Ebenso werden Zeitdifferenzen von Kontrollsignalen des zweiten Kontrollsensors gebildet und mit Sollwerten verglichen.

Dies bedeutet, dass Kontrollsignale der Kontrollsensoren für eine Fehlerprüfung nicht nur in Beziehung miteinander gesetzt werden, sondern auch einzelnen durch Sollwertvergleiche geprüft werden.

Besonders vorteilhaft sind die Sollwerte jeweils von einer oberen und unteren Toleranzgrenze gebildet.

Die Toleranzgrenzen sind in der Auswerteeinheit eingespeichert bzw. können in einem Parametriervorgang in den optischen Sensor eingegeben werden.

Dabei sind zweckmäßig als erste Sollwerte eine erste untere Toleranzgrenze und eine erste obere Toleranzgrenze vorgegeben. Es liegt ein fehlerfreier Fall dann vor, wenn die jeweilige Zeitdifferenz innerhalb des durch die erste untere Toleranzgrenze und die erste obere Toleranzgrenze gebildeten Überwachungs-Zeitintervalls liegt.

Eine fehlerfreie Funktion, insbesondere eine fehlerfreie Funktion der Ablenkeinheit und der Kontrollsensoren ist dann gegeben, wenn die jeweilige ermittelte Zeitdifferenz innerhalb des Überwachungs-Zeitintervall liegt.

Liegt die Zeitdifferenz außerhalb des Überwachungs-Zeitintervalls, so liegt eine Fehlfunktion vor, was mit einer Alarmmeldung oder einer Fehlermeldung signalisiert werden kann. Alternativ oder zusätzlich kann im Fehlerfall die Ausgabe von Ausgangssignalen, die durch die Erfassung von Marken generiert werden, ausgesetzt werden, damit keine fehlerhaften Ausgangssignale ausgegeben werden.

Die Funktionalität der Fehlerprüfung kann dadurch noch erweitert werden, dass als weitere Sollwerte eine weitere untere Toleranzgrenze und eine weitere obere Toleranzgrenze vorgegeben sind, welche ein Warn-Zeitintervall begrenzen. Eine Warnmeldung wird generiert, wenn die jeweilige Zeitdifferenz außerhalb des Warn-Zeitintervalls liegt.

Dabei ist jeweils ein Warn-Zeitintervall einem Überwachungs-Zeitintervall zugeordnet, wobei das Warn-Zeitintervall kleiner ist als das Überwachungs-Zeitintervall und innerhalb des Überwachungs-Zeitintervalls liegt.

Damit kann die Warnmeldung generiert werden, wenn noch keine Fehlfunktion vorliegt, bzw. die Zeitdifferenz noch innerhalb des Überwachungs-Zeitintervalls, jedoch außerhalb der Warn-Zeitintervalls, liegt.

Damit kann mit der Warnmeldung frühzeitig auf drohende Fehlfunktionen hingewiesen werden.

Der erfindungsgemäße optische Sensor kann zur Erfassung von Marken, insbesondere Barcodes, insbesondere in Applikationen der Produktidentifikation eingesetzt werden.

Generell kann der optische Sensor auch zu Positionieraufgaben eingesetzt werden. In diesem Fall können Marken als Positionsmarken eines Positionsmaßsystems ausgebildet sein, wobei in den Positionsmarken die Positionen innerhalb des Positionsmaßsystems kodiert sind. Das Positionsmaßsystem kann beispielsweise an einer eine Fahrbahn begrenzende Leitplanke angeordnet sein. Der optische Sensor kann auf einem Fahrzeug angeordnet sein. Durch Erfassung der Positionsmarken mittels des optischen Sensors kann das Fahrzeug positioniert werden.

Die Erfindung wird im Folgenden anhand der Zeichnungen erläutert. Es zeigen:

Figur 1: Ausführungsbeispiel des erfindungsgemäßen optischen Sensors in einer ersten Ablenkposition von Lichtstrahlen.

Figur 2: Optischer Sensor gemäß Figur 1, in einer zweiten Ablenkposition von Lichtstrahlen.

Figur 3: Applikationsbeispiel für den optischen Sensor gemäß den Figuren 1 und 2 zur Positionierung eines Fahrzeugs.

Figur 4: Zeitlicher Verlauf eines SOS-Signals des optischen Sensors gemäß Figuren 1 und 2.

Figur 5: Vergrößerter Teilausschnitt, des SOS-Signals gemäß Figur 4.

Figur 6: Zeitlicher Verlauf eines Signals des optischen Sensors gemäß den Figuren 1 und 2.

Figur 7: Kombinierte Darstellung des SOS-Signals gemäß Figur 4 und des Signals gemäß Figur 6.

Figur 8: Vergrößerter Teilausschnitt des Signalverlaufs gemäß Figur 7.

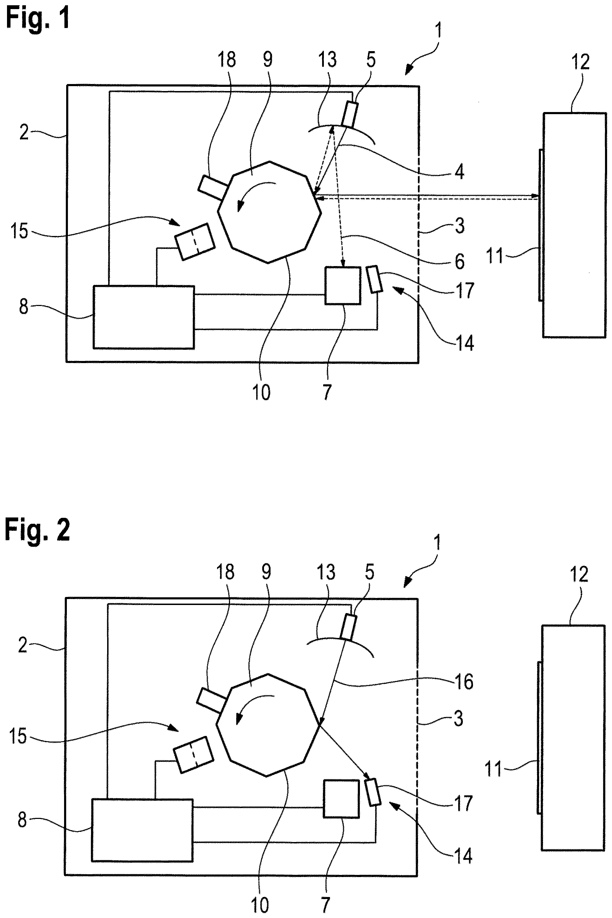

Die Figuren 1 und 2 zeigen ein Ausführungsbeispiel des erfindungsgemäßen optischen Sensors 1. Die Sensorkomponenten des optischen Sensors 1 sind in einem Gehäuse 2 integriert, in dessen Frontwand ein Austrittsfenster 3 vorgesehen ist.

Der optische Sensor 1 weist einen Sendelichtstrahlen 4 emittierenden Sender 5 und einen Empfangslichtstrahlen 6 empfangenden Empfänger 7 auf. Der Sender 5 kann von einer Laserdiode gebildet sein, der Empfänger 7 von einer Photodiode. Im Empfänger 7 generierte Empfangssignale werden in einer Auswerteeinheit 8 ausgewertet. Für den Einsatz des optischen Sensors 1 in sicherheitstechnischen Applikationen kann die Auswerteeinheit 8 aus zwei zyklisch gegenseitig überwachenden Rechnereinheiten bestehen.

Der optische Sensor 1 weist eine Ablenkeinheit auf, mittels derer die Sendelichtstrahlen 4 abgelenkt und periodisch innerhalb eines flächigen Erfassungsbereichs geführt werden. Im vorliegenden Fall erfolgt die Ablenkung in einem ebenen Erfassungsbereich, der in der Zeichenebene der Figuren 1 und 2 liegt.

Die Ablenkeinheit umfasst eine Polygonspiegelrad 9, das mit einem nicht dargestellten Antrieb angetrieben wird und sich dadurch um eine Drehachse dreht. Die Drehachse ist von der Symmetrieachse des Polygonspiegelrads 9 gebildet und verläuft senkrecht zur Zeichenebene der Figuren 1 und 2. Das Polygonspiegelrad 9 weist eine Anzahl von Facetten 10 auf, die Spiegelflächen ausbilden, an welchen die Sendelichtstrahlen 4 reflektiert werden.

Im vorliegenden Fall sind acht identisch ausgebildete Facetten 10 vorgesehen, deren Normalenvektoren senkrecht zur Drehachse orientiert sind, was jedoch nicht zwingend ist.

Die vom Sender 5 emittierten Sendelichtstrahlen 4 werden an Facetten 10 des Polygonspiegelrads 9 abgelenkt und überstreichen so den Erfassungsbereich, dessen Größe durch die Größe und Anzahl der Facetten 10 bestimmt sind.

Der optische Sensor 1 dient zur Erfassung von Marken, insbesondere Barcodes 11. Die Figuren 1 und 2 zeigen einen auf einem Objekt 12 vorhandenen Barcode 11.

Die vom Sender 5 emittierten Sendelichtstrahlen 4 werden an der Ablenkeinheit abgelenkt, durchsetzen das Austrittsfenster 3 und gelangen so in den Erfassungsbereich. An einem Barcode 11 werden die Sendelichtstrahlen 4 reflektiert und als Empfangslichtstrahlen 6 über das Austrittsfenster 3, die Ablenkeinheit und über einen stationären Umlenkspiegel 13 zum Empfänger 7 geführt. Durch die Ablenkbewegung der Sendelichtstrahlen 4 werden diese über den gesamten Barcode 11 oder auch Teilstücke des Barcodes 11 geführt.

Entsprechend dem Kontrastmuster des Barcodes 11 weist das Empfangssignal eine Amplitudenmodulation auf, die in der Auswerteeinheit 8 zur Dekodierung des Barcodes 11 ausgewertet wird. Das Dekodierergebnis wird als Ausgangssignal vom optischen Sensor 1 ausgegeben.

Erfindungsgemäß weist der optische Sensor 1 zwei stationär im Gehäuse 2 angeordnete Kontrollsensoren 14, 15 auf. Der erste Kontrollsensor 14 weist ein Lichtstrahlen 16 emittierendes Sendeelement und ein Empfangselement 17 auf, wobei im vorliegenden Fall das Sendeelement vom Sender 5 gebildet ist und die Lichtstrahlen 16 von den Sendelichtstrahlen 4 gebildet sind.

Wie Figur 2 zeigt, gelangen die Lichtstrahlen 16 des Sendeelements nur dann zum Empfangselement 17 wenn diese Lichtstrahlen 16 am Übergang zwischen zwei Facetten 10 reflektiert werden. Das dadurch erhaltene Signal F am Empfangselement 17 bildet nicht nur ein erstes Kontrollsignal, sondern auch ein SOS-Signal S (Start-of-Scan/End-of-Scan), das den Anfang/Ende eines Scans oder einen definierten zeitlichen Bezug zum Anfang/Ende eines Scans definiert. Während eines Scans werden die Sendelichtstrahlen 4 an einer Facette 10 reflektiert, so dass sie einmal den Erfassungsbereich überstreichen.

Der optische Sensor 1 weist weiterhin einen zweiten Kontrollsensor 15 in Form einer Lichtschranke auf. Wie die Figuren 1 und 2 zeigen, ist an nur einer Facette 10 ein Referenzelement 18 angeordnet, das im vorliegenden Fall von einem Facettenblech gebildet ist. Dieses ist mit der Lichtschranke erfassbar. Sobald die Facette 10 mit dem Referenzelement 18 der Lichtschranke zugeordnet ist, erfasst diese das Referenzelement 18 und generiert als zweites Kontrollsignal ein Signal F.

Die Kontrollsignale der Kontrollsensoren 14, 15 werden in die Auswerteeinheit 8 eingelesen und dort für eine Fehlerkontrolle ausgewertet.

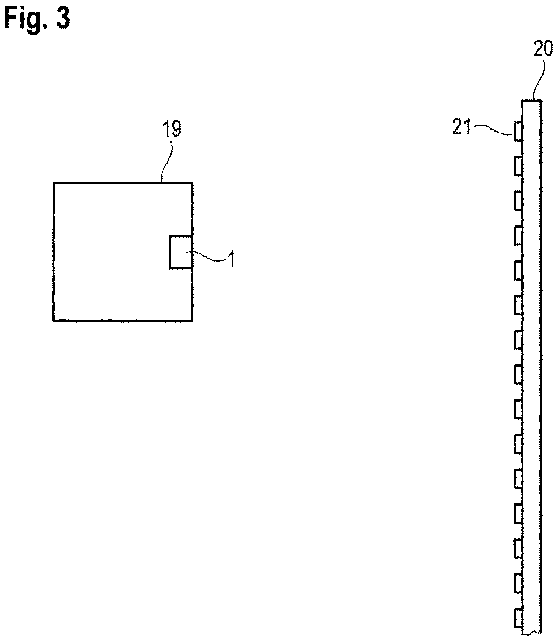

Figur 3 zeigt ein Applikationsbeispiel für den optischen Sensor 1 gemäß den Figuren 1 und 2. Der optische Sensor 1 ist auf einem Fahrzeug 19 angeordnet, das entlang einer Fahrbahn bewegt wird. An einer stationären Fahrbahnbegrenzung 20 ist eine Anordnung von Positionsmarken 21 angeordnet, die ein Positionsmaßsystem ausbilden. Die äquidistant angeordneten Positionsmarken 21 sind beispielsweise auf eine Folie aufgebracht, die auf der Fahrbahnbegrenzung 20 aufgeklebt ist. In den Positionsmarken 21 sind die Positionen innerhalb des Positionsmaßsystems kodiert. Durch Erfassung der Positionsmarken 21 mittels des optischen Sensors 1 wird die Position des Fahrzeugs 19 bestimmt, was zu dessen Positionierung verwendet werden kann. In einer anderen Anwendung könnte der optische Sensor 1 fest montiert sein und die Positionsmarken 21 auf einem beweglichen Gestell montiert sein.

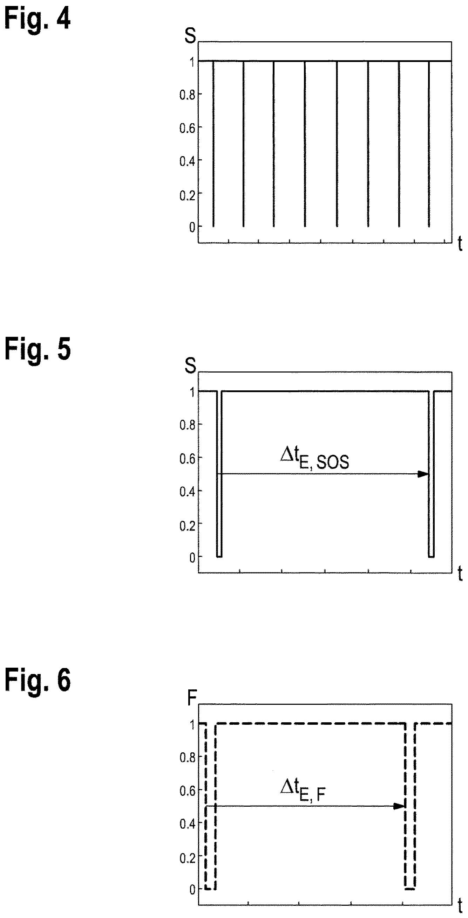

Die Figuren 4 bis 8 zeigen zeitliche Verläufe der mit den Kontrollsensoren 14, 15 generierten Kontrollsignalen, die für eine Funktionsprüfung des optischen Sensors 1 herangezogen werden. Dabei erfolgt die Funktionsprüfung erst nach Abschluss einer Anlaufphase des Antriebs des Polygonspiegelrads 9, so dass die Drehzahl des Polygonspiegelrads 9 konstant ist.

Figur 4 zeigt den zeitlichen Verlauf des SOS-Signals S des ersten Kontrollsensors 14.

Da das Polygonspiegelrad 9 acht Facetten 10 aufweist, werden mit dem ersten Kontrollsensor 14 pro Umdrehung des Polygonspiegelrads 9 acht Übergänge zwischen zwei Facetten 10 registriert, so dass acht Kontrollsignale erhalten werden, die zeitlich äquidistant aufeinander folgen. Wie Figur 5 zeigt, beträgt der zeitliche Abstand zweier aufeinander folgender Kontrollsignale (gemessen jeweils von deren Vorderflanke aus)

$$\Delta t_{\text{E,SOS}}.$$

In der Auswerteeinheit 8 erfolgt eine Funktionsüberprüfung derart, dass der zeitliche Abstand $\Delta t_{\text{E,SOS}}$ kontrolliert

wird. Hierzu werden in der Auswerteeinheit 8 als Sollwerte eine obere Toleranzgrenze $t_{O,SOS}$ und eine untere Toleranzgrenze $t_{U,SOS}$ vorgegeben, wobei die Vorgabe abhängig von der Drehzahl des Polygonspiegelrads 9 ist. Diese Toleranzgrenzen definieren ein Überwachungs-Zeitintervall. Eine fehlerfreie Funktion des optischen Sensors 1 liegt vor, wenn folgende Bedingung erfüllt ist:

$$t_{U,SOS} \leq \Delta t_{E,SOS} \leq t_{O,SOS} \qquad (1)$$

Ist diese Bedingung nicht erfüllt, liegt ein Fehler im optischen Sensor 1 vor, was durch Ausgabe einer Alarmmeldung oder Fehlermeldung signalisiert werden kann. Alternativ oder zusätzlich wird im Fehlerfall die Ausgabe der Ausgangssignale ausgesetzt.

Zusätzlich wird durch Vorgabe weiterer Toleranzgrenzen $t_{Warn,U,SOS}$, $t_{Warn,O,SOS}$ ein Warn-Zeitintervall vorgegeben. Im optischen Sensor 1 wird ein Warnsignal generiert, wenn folgende Bedingung erfüllt ist.

$$t_{Warn,U,SOS} \leq \Delta t_{E,SOS} \leq t_{Warn,O,SOS} \qquad (2)$$

Dabei gilt:

$$t_{Warn,U,SOS} \geq t_{U,SOS} \quad \text{und} \quad t_{Warn,O,SOS} \leq t_{O,SOS}$$

Somit wird eine Warnmeldung generiert, bevor ein Fehler auftritt, d.h. bevor Gleichung (1) erfüllt ist.

Figur 6 zeigt den zeitlichen Verlauf des mit dem zweiten Kontrollsensor 15 generierten Signals F. Da das Referenzelement 18 pro Umdrehung des Polygonspiegelrads 9 nur einmal an der den zweiten Kontrollsensor 15 bildenden Lichtschranke vorbei bewegt wird, generiert diese pro Umlenkung des Polygonspiegelrads 9 nur einen Kontrollsignal. Der zeitliche Abstand zweier untereinander folgenden Kontrollsignale beträgt $\Delta t_{E,F}$ (Figur 6).

Auch dieser zeitliche Abstand kann, analog zu dem SOS-Signal S, mittels eines Überwachungs-Zeitintervalls und Warn-Zeitintervalls kontrolliert und überwacht werden.

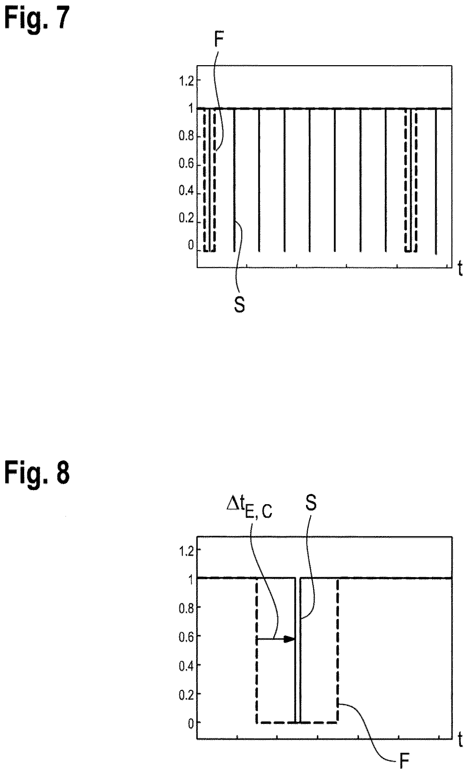

Erfindungsgemäß werden für eine weitere Funktionsprüfung die Kontrollsignale der beiden Kontrollsensoren 14, 15 in Beziehung gesetzt. Dies ist in den Figuren 7 und 8 veranschaulicht, die die Zeitverläufe des SOS-Signals S und des Signals F zeigen.

Die Frequenz des SOS-Signals S ist, entsprechend der Anzahl der Facetten 10 des Polygonspiegelrads 9, achtmal höher als die Frequenz des Signals F. Das Signal F tritt synchron mit einem der Kontrollsignale des SOS-Signals S auf. Durch die endliche Ausdehnung des Referenzelements 18 ist die Pulsbreite, d.h. Zeitdauer, des Signals F größer als die Pulsbreite eines Kontrollsignal des SOS-Signals S, so dass das Kontrollsignal des SOS-Signals S vollständig innerhalb des Signals F liegt, wie die Figuren 7 und 8 zeigen.

Die Zeitdifferenz zwischen SOS-Signal S und Signal F ist in vorliegendem Fall definiert durch den zeitlichen Abstand $\Delta t_{E,C}$ zwischen der Vorderflanke des Signals F und der Vorderflanke des innerhalb des Signals F liegenden SOS-Signals S (Figur 8).

Zur Durchführung einer Fehlerkontrolle wird dieser zeitliche Abstand $\Delta t_{E,C}$ mit in der Auswerteeinheit 8 vorgegebenen Sollwerten in Form einer oberen Toleranzgrenze $t_{O,C}$ und einer unteren Toleranzgrenze $t_{U,C}$ verglichen.

Eine fehlerfreie Funktion liegt vor, wenn der zeitliche Abstand $\Delta t_{E,C}$ innerhalb eines durch diese Toleranzgrenzen definierten Überwachungs-Zeitintervall liegt, d.h. wenn folgende Beziehung erfüllt ist.

$$t_{U,C} \leq \Delta t_{E,C} \leq t_{O,C} \qquad (3)$$

Liegt der zeitliche Abstand außerhalb des Überwachungs-Zeitintervalls liegt eine Fehlfunktion des optischen Sensors 1, vor was mit einer Alarmmeldung oder einer Fehlermeldung signalisiert werden kann. Alternativ oder zusätzlich kann wieder die Ausgabe des Ausgangssignals bei Vorliegen einer Fehlfunktion ausgesetzt werden, d.h. der jeweilige Scan wird in der Auswerteeinheit 8 verworfen.

Mit dieser Überprüfung kann beispielsweise festgestellt werden, ob das des Referenzelement 18 bildende Facettenblech verbogen oder verschoben wurde. Auch kann ein Fehler in Form einer Verschiebung des Empfangselements 17 relativ zum Sendeelement aufgedeckt werden. Auch können damit Hardwarefehler oder Fehler im Programmablauf der Software der Auswerteeinheit 8 bei der Signalauswertung aufgedeckt werden.

Weiterhin können Warnmeldungen generiert werden, wenn in der Auswerteeinheit 8 festgestellt wird, dass der zeitliche Abstand $\Delta t_{E,C}$ außerhalb eines durch Toleranzgrenzen $t_{Warn,U,C}$ und $t_{Warn,O,C}$ definierten Warn-Zeitintervalls liegt, d.h. wenn folgende Beziehung erfüllt ist:

$$t_{\text{Warn,U,C}} \leq \Delta t_{\text{E,C}} \leq t_{\text{Warn,O,C}} \qquad\qquad (4)$$

Dabei gilt:

$$t_{\text{Warn,U,C}} \geq t_{\text{U,C}} \quad \text{und} \quad t_{\text{Warn,O,C}} \leq t_{\text{O,C}}$$

Somit stellt auch in diesem Fall das Warnsignal eine Frühwarnung zum Auftreten einer Fehlfunktion dar.

Prinzipiell kann das Warn-Zeitintervall in mehrere Teilintervalle unterteilt sein, wodurch eine gestufte Generierung von Warnmeldungen ermöglicht wird.

Generell müssen zur Definition zeitlicher Abstände nicht zwingend Vorderflanken von Signalen F verwendet werden. Generell kann der Bezug auf unterschiedliche Flanken von Signalen F erfolgen.

Bezugszeichenliste

(1)     optischer Sensor
(2)     Gehäuse
(3)     Austrittsfenster
(4)     Sendelichtstrahl
(5)     Sender
(6)     Empfangslichtstrahl
(7)     Empfänger
(8)     Auswerteeinheit
(9)     Polygonspiegelrad
(10)    Facette
(11)    Barcode
(12)    Objekt
(13)    Umlenkspiegel
(14)    Kontrollsensor
(15)    Kontrollsensor
(16)    Lichtstrahl
(17)    Empfangselement
(18)    Referenzelement
(19)    Fahrzeug
(20)    Fahrbahnbegrenzung
(21)    Positionsmarke

(S)     SOS-Signal
(F)     Signal

**Patentansprüche**

1.  Optischer Sensor (1) zur Erfassung von Marken mit einem Sendelichtstrahlen (4) emittierenden Sender (5), einem Empfangslichtstrahlen (6) empfangenden Empfänger (7), einer Auswerteeinheit (8), in welcher Empfangssignale des Empfängers (7) zur Detektion von Marken ausgewertet werden, und mit einer Ablenkeinheit in Form eines Facetten (10) aufweisenden Polygonspiegelrads (9), wobei durch eine Drehbewegung des Polygonspiegelrads (9) um eine Drehachse die Sendelichtstrahlen (4) nacheinander an den Facetten (10) abgelenkt und dadurch periodisch innerhalb eines Erfassungsbereichs geführt sind, **dadurch gekennzeichnet, dass** zwei stationär angeordnete Kontrollsensoren (14, 15) vorhanden sind, mittels derer mindestens eine Facettenstruktur erfasst wird, und dass in der Auswerteeinheit (8) eine Funktionskontrolle dadurch durchgeführt wird, dass Kontrollsignale der Kontrollsensoren (14, 15) miteinander in Beziehung gesetzt werden.

**2.** Optischer Sensor (1) nach Anspruch 1, **dadurch gekennzeichnet, dass** die Kontrollsensoren (14, 15) unterschiedliche Facettenstrukturen erfassen.

**3.** Optischer Sensor (1) nach einem der Ansprüche 1 oder 2, **dadurch gekennzeichnet, dass** das Polygonspiegelrad (9) eine Anordnung von identischen Facetten (10) aufweist, wobei bei Ablenkung an jeder Facette (10) die Sendelichtstrahlen (4) innerhalb eines Scans den Erfassungsbereich überstreichen.

**4.** Optischer Sensor (1) nach einem der Ansprüche 2 bis 3, **dadurch gekennzeichnet, dass** mit einem ersten Kontrollsensor (14) der Übergangsbereich zwischen zwei Facetten (10) erfasst wird.

**5.** Optischer Sensor (1) nach einem der Ansprüche 3 und 4, **dadurch gekennzeichnet, dass** das vom ersten Kontrollsensor (14) generierte Signal (F) bei Detektion eines Übergangsbereichs zwischen zwei Facetten (10) ein Startsignal oder Endesignal für einen Scan und ein Kontrollsignal bildet.

**6.** Optischer Sensor (1) nach einem der Ansprüche 4 oder 5, **dadurch gekennzeichnet, dass** der erste Kontrollsensor (14) ein Lichtstrahlen (16) emittierendes Sendeelement und ein Empfangselement (17) aufweist, die relativ zueinander so positioniert sind, dass die Lichtstrahlen (16) des Sendeelements nur dann zum Empfangselement (17) geführt sind, wenn diese am Übergangsbereich zwischen zwei Facetten (10) reflektiert werden.

**7.** Optischer Sensor (1) nach einem der Ansprüche 1 bis 6, **dadurch gekennzeichnet, dass** im Bereich einer Facette (10) des Polygonspiegelrads (9) ein Referenzelement (18) vorhanden ist, welches mit einem zweiten Kontrollsensor (15) erfassbar ist.

**8.** Optischer Sensor (1) nach Anspruch 7, **dadurch gekennzeichnet, dass** der zweite Kontrollsensor (15) ein Kontrollsignal generiert, wenn sich das Referenzelement (18) in dessen Detektionsbereich bewegt.

**9.** Optischer Sensor (1) nach einem der Ansprüche 7 oder 8, **dadurch gekennzeichnet, dass** das Referenzelement (18) am Rand der Facette (10) von dieser abstehend befestigt ist.

**10.** Optischer Sensor (1) nach Anspruch 9, **dadurch gekennzeichnet, dass** das Referenzelement (18) ein Blechteil ist.

**11.** Optischer Sensor (1) nach einem der Ansprüche 7 bis 10, **dadurch gekennzeichnet, dass** der zweite Kontrollsensor (15) eine Lichtschranke ist.

**12.** Optischer Sensor (1) nach einem der Ansprüche 1 bis 11, **dadurch gekennzeichnet, dass** die Kontrollsignale des ersten und zweiten Kontrollsensors (14, 15) zeitlich in Beziehung gesetzt werden.

**13.** Optischer Sensor (1) nach einem der Ansprüche 1 bis 12, **dadurch gekennzeichnet, dass** Zeitdifferenzen von Kontrollsignalen des ersten und zweiten Kontrollsensors (14, 15) gebildet werden, und dass die Zeitdifferenzen mit Sollwerten verglichen werden.

**14.** Optischer Sensor (1) nach einem der Ansprüche 1 bis 13, **dadurch gekennzeichnet, dass** Zeitdifferenzen von Kontrollsignalen des ersten Kontrollsensors (14) gebildet werden und mit Sollwerten verglichen werden.

**15.** Optischer Sensor (1) nach einem der Ansprüche 1 bis 14, **dadurch gekennzeichnet, dass** Zeitdifferenzen von Kontrollsignalen des zweiten Kontrollsensors (15) gebildet werden und mit Sollwerten verglichen werden.

**16.** Optischer Sensor (1) nach einem der Ansprüche 13 bis 15, **dadurch gekennzeichnet, dass** die Sollwerte jeweils von einer oberen und unteren Toleranzgrenze gebildet sind.

**17.** Optischer Sensor (1) nach Anspruch 16, **dadurch gekennzeichnet, dass** als erste Sollwerte eine erste untere Toleranzgrenze und eine erste obere Toleranzgrenze vorgegeben sind, und dass ein fehlerfreier Fall dann vorliegt, wenn die jeweilige Zeitdifferenz innerhalb des durch die erste untere Toleranzgrenze und die erste obere Toleranzgrenze gebildeten Überwachungs-Zeitintervalls liegt.

**18.** Optischer Sensor (1) nach einem der Ansprüche 1 bis 17, **dadurch gekennzeichnet, dass** als weitere Sollwerte eine weitere untere Toleranzgrenze und eine weitere obere Toleranzgrenze vorgegeben sind, welche ein Warn-Zeitintervall begrenzen, und dass eine Warnmeldung generiert wird, wenn die jeweilige Zeitdifferenz außerhalb des Warn-Zeitintervalls liegt.

19. Optischer Sensor (1) nach einem der Ansprüche 1 bis 18, **dadurch gekennzeichnet, dass** das Warn-Zeitintervall in mehrere Teilintervalle unterteilt ist, wodurch mehrere Warnstufen gebildet werden.

20. Optischer Sensor (1) nach einem der Ansprüche 1 bis 19, **dadurch gekennzeichnet, dass** die Auswerteeinheit (8) einen mehrkanaligen, fehlersicheren Aufbau aufweist.

21. Verfahren zur Erfassung von Marken mittels eines optischen Sensors (1), mit einem Sendelichtstrahlen (4) emittierenden Sender (5), einem Empfangslichtstrahlen (6) empfangenden Empfänger (7), einer Auswerteeinheit (8), in welcher Empfangssignale des Empfängers (7) zur Detektion von Marken ausgewertet werden, und mit einer Ablenkeinheit in Form eines Facetten (10) aufweisenden Polygonspiegelrads (9), wobei durch eine Drehbewegung des Polygonspiegelrads (9) um eine Drehachse die Sendelichtstrahlen (4) nacheinander an den Facetten (10) abgelenkt und dadurch periodisch innerhalb eines Erfassungsbereichs geführt sind, **dadurch gekennzeichnet, dass** zwei stationär angeordnete Kontrollsensoren (14, 15) vorhanden sind, mittels derer mindestens eine Facettenstruktur erfasst wird, und dass in der Auswerteeinheit (8) eine Funktionskontrolle dadurch durchgeführt wird, dass Kontrollsignale der Kontrollsensoren (14, 15) miteinander in Beziehung gesetzt werden.

# Fig. 1

# Fig. 2

**Fig. 3**

**Fig. 4**

**Fig. 5**

**Fig. 6**

## Fig. 7

## Fig. 8

Europäisches
Patentamt

European
Patent Office

Office européen
des brevets

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 587 404 A1 (LEUZE ELECTRONIC GMBH & CO KG [DE]) 1. Mai 2013 (2013-05-01) * Absätze [0006], [0015], [0042], [0044], [0049], [0051], [0054] – [0056], [0058], [0060], [0061], [0067] – [0070]; Abbildungen 1,1b-c,2 * ----- | 1-21 | INV. G01S7/481 G01S7/497 G01S17/931 G02B26/12 G06K7/10 |
| A | EP 3 486 833 A1 (SICK AG [DE]) 22. Mai 2019 (2019-05-22) * Absatz [0049]; Abbildungen 8a-8d, 9 * ----- | 6 | |
| A | US 5 719 385 A (WIKE JR CHARLES K [US] ET AL) 17. Februar 1998 (1998-02-17) * Spalte 3 Zeile 66-67 und Spalte 4 Zeile 1-6; Abbildung 6 * ----- | 6 | |

| RECHERCHIERTE SACHGEBIETE (IPC) |
|---|
| G01S G02B G06K |

Der vorliegende Recherchenbericht wurde für alle Patentansprüche erstellt

| Recherchenort | Abschlußdatum der Recherche | Prüfer |
|---|---|---|
| München | 3. August 2023 | Auinger, Florian |

**EP 4 446 772 A1**

**ANHANG ZUM EUROPÄISCHEN RECHERCHENBERICHT**
**ÜBER DIE EUROPÄISCHE PATENTANMELDUNG NR.**

EP 23 16 7653

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-08-2023

| Im Recherchenbericht angeführtes Patentdokument | Datum der Veröffentlichung | Mitglied(er) der Patentfamilie | Datum der Veröffentlichung |
|---|---|---|---|
| EP 2587404 A1 | 01-05-2013 | DE 102011054931 A1<br>EP 2587404 A1 | 02-05-2013<br>01-05-2013 |
| EP 3486833 A1 | 22-05-2019 | CN 109815756 A<br>DE 102017127420 A1<br>EP 3486833 A1<br>JP 2019124924 A<br>KR 20190058331 A<br>US 2019154807 A1 | 28-05-2019<br>23-05-2019<br>22-05-2019<br>25-07-2019<br>29-05-2019<br>23-05-2019 |
| US 5719385 A | 17-02-1998 | DE 69630654 T2<br>EP 0778538 A2<br>JP 3834115 B2<br>JP H09179933 A<br>US 5719385 A | 07-10-2004<br>11-06-1997<br>18-10-2006<br>11-07-1997<br>17-02-1998 |

EPO FORM P0461

Für nähere Einzelheiten zu diesem Anhang : siehe Amtsblatt des Europäischen Patentamts, Nr.12/82

15